# EUROPEAN PATENT SPECIFICATION

(11) **EP 4 467 846 B1**
(45) Date of publication and mention of the grant of the patent: **28.10.2026**
(21) Application number: 23174425.1
(22) Date of filing: 22.05.2023
(51) Int. Cl.: F16H 57/00, H02K 7/00, H02K 7/08, F16H 57/021, B60K 1/02, F16H 1/08, F16H 1/20

(54) **A DRIVETRAIN FOR A VEHICLE**
ANTRIEBSSTRANG FÜR EIN FAHRZEUG
TRANSMISSION POUR VÉHICULE

(43) Date of publication of application: 27.11.2024
(73) Proprietor: Rimac Technology LLC, 10431 Sveta Nedelja (HR)
(72) Inventor: KAURIC, Mario, 44400 Glina (HR); GRACNER, Igor, 10340 Vrbovec (HR); PUTAREK, Ljudevit, 42240 Ivanec (HR)
(74) Representative: Tarabbia, Luigi

(56) References cited:
- EP-A2- 2 310 220
- DE-A1- 102020 117 451
- JP-A- 2017 158 377
- US-A1- 2020 011 407
- US-A1- 2021 188 067

## Description

The present invention is related to a drivetrain - or otherwise stated in the language of the technical sector of pertinence, a gearbox (which therefore can be considered an equivalent definition within the wording of the present invention) - which can typically be connected between one or more power sources, such as for example electric motors, and one or more driving wheels (or axles connected to such driving wheels) of a vehicle, and to a vehicle housing one or more of such drivetrains or gearboxes.

It is known in the art that gearboxes are usually placed between a driving (or "traction") wheel and a motor/engine in order to achieve a multiplying effect on the torque: to this aim, drivetrains and/or gearboxes are designed in order to cope with mechanical stresses coming from both ends of the kinematic chain wherein they reside, and in order to keep their structural integrity as long as they are subjected to torque originating in both directions as well as some transient loads (bumps, inertial forces, etc.) which could likely be much higher than drive torque for short periods of time.

For example, it is known from US2021/188067 a bearing and shaft arrangement of an automobile vehicle electric drive unit including a gearbox, a first electric motor within the gearbox which axially rotates a first shaft within the gearbox, a second electric motor within the gearbox which axially rotates a second shaft within the gearbox, a first roller bearing assembly supporting the first shaft to a first structural member of the gearbox, a second roller bearing assembly supporting the second shaft to the first structural member of the gearbox. In this known device, a thrust bearing is positioned between the first roller bearing assembly and the second roller bearing assembly and directly contacts the first shaft and the second shaft in a drive mode and reacts a first axial load of the first shaft and a second axial load of the second shaft directed toward the first axial load.

It is also known from EP2310220 a ehicle drive device which includes two independent systems provided for two driving wheels, respectively. Each system includes a motor-generator, an output member, a drive transmission system which connects the motor-generator and the output member to each other so that driving force is transmitted, and a case integrally accommodating the rotating electrical machines, the output members, and the drive transmission systems of the two systems. The motor-generator, the output member, and a counter deceleration mechanism included in the drive transmission system of each system are provided so that their respective rotation axes are parallel to each other, and are positioned so as to overlap each other in the rotation axis direction. The rotating electrical machine of each system is provided with an output portion located on one side of the motor-generator which is distal from the corresponding driving wheel in the rotation axis direction of the motor-generator.

Furthermore, it is known from DE102020117451 a transmission for motor vehicles, which transmits power from two electric motors to two wheels, comprising a first drive shaft, a second drive shaft arranged coaxially with the first drive shaft, a first intermediate shaft, a second intermediate shaft arranged coaxially with the first intermediate shaft, a first output shaft and a second output shaft arranged coaxially with the first output shaft, wherein the transmission has a stiffening shaft arranged coaxially with the first intermediate shaft for stiffening the first intermediate shaft and the second intermediate shaft, wherein the first intermediate shaft and the second intermediate shaft are rotatably mounted on the stiffening shaft is mounted, wherein the stiffening shaft is rotatably mounted at its axial ends on a housing of the transmission. Document JP 2017 158377 A also discloses a drive train of the prior art.

Last but not least, it is known from US2020/011407 a precision cantilever bearing assembly to align the output hubs of an axle assembly which includes a cantilever bearing positioned in one hub bore. The cantilever bearing has an axially extending bore. A shaft plug having an axially extending bore is positioned in the other hub bore. A shaft is positioned in and rotates and counter rotates in the cantilever bearing axially extending bore and is fixed in the shaft plug bore to facilitate alignment of the hubs.

**In** the development of electrically-powered vehicles, drivetrain and/or gearboxes play an important role for various reasons, e.g., owing to the fact that electric machines usually operate at very high rotational speed which needs to be reduced to drive the wheels: this often leads to the definition of single reduction ratio drivetrains/gearboxes, or in some limited cases, of drivetrains/gearboxes with two or more interchangeable transmission ratios.

Besides, it is also to be observed that electrically powered vehicles can host more than one (electric) engine/motor, and as a consequence of this gearboxes/drivetrains should be designed and built in order to be properly coupled with the overall torque availability given from such multiple motors designs (usually, this coupling occurs by dedicating each single motor to its respective drivetrain).

Owing to the fact that gearboxes/drivetrains are usually made up of a sequence of gears resting on respective shafts (and such gears are placed in a given relative spatial displacement/sequence within a containing "cover" of the gearbox itself), when the torque coming from the motor is channelled through such gears, internal mechanical loads are generated in the area of intermeshing between two adjacent gears.

More in detail, the following force/load components can be generated in the just cited intermeshing region:
- radial components (responsible for bending of the shaft and for determining a radial load on the drivetrain bearings);
- axial components (e.g., in case of usual helix gears, responsible for bending of the shaft and for determining radial and axial forces on the bearings); and
- tangential components (causing bending of the shaft, torsional stress on the shaft - namely, on the part of the shaft which is torsionally loaded - and radial forces on the bearings),
and in this complex system of loads, the design of a drivetrain must compensate and consider all the aforecited condition of mechanical stress.

**In** gearbox configurations of the known type, the internal axial loads are usually discharged on the bearings which support the gears' shafts, and such bearings can be rather cumbersome in terms of positions and/or sheer number and dimensions: therefore, in the known layouts of gearboxes/drivetrains, a significant drawback arises in terms of complexity, mass/weight, productive cost and excessive volume occupancy (this last drawback is becoming more and more significant owing to the fact that such gearboxes can be coupled to at least two engines/motors, and therefore they need to be as narrow as they can be notwithstanding the very high degree of axial loads that are discharged into them by a twin motor architecture (such axial loads are produced because of gears having a non-zero helix angle).

Having stated the prior art drawbacks, it is an object of the present invention to provide a drivetrain (or gearbox) which can overcome the aforementioned drawbacks, and which can withstand a very high torque by efficiently sustaining any kind and/or "direction" of loads deriving from such a high torque itself.

At the same time, the present invention aims to obtain a drivetrain wherein a substantial reduction of the size of the bearings is possible (by design and manufacturing), so as to enable a reduction - at least, in some cases - of the so-called "height" and/or the "length" and/or of any other characteristic dimension of the drivetrain itself such as the relative axis distance in a T-shaped configuration.

Having just cited a T-shaped configuration, a main aim of the present invention is to provide a drivetrain capable of efficiently coping with the mechanical loads in a so-called "T-shape" configuration/design: such an embodiment of the invention is therefore capable to withstand axial forces/loads coming from the two flow paths for torques respectively generated by the two engines which are mounted on opposite sides of the drivetrain itself, and such axial loads can be balanced or imbalanced depending on the various driving situations (e.g., driving in a straight line or cornering, accelerating or braking and so on), on varying driver's inputs and on any possible automated input imparted by the vehicle's onboard systems such as ABS, TCS, ESC or torque vectoring control systems.

At the same time, the present invention aims to provide a drivetrain/gearbox wherein a significant internal loads' reduction is achieved, thereby determining a significant reduction in space/volume occupancy, a reduction in the overall number of components of the drivetrain, and a better productive economy and shorter and easier assembling procedures as well (e.g., by allowing smaller, cheaper, lighter bearings, better packaging and reduction of losses).

These aims, along with other technical advantages, will be achieved by a drivetrain as in the appended claims. The following figures show different embodiments,
- Figures 1 and 2 are cross-section views of a possible embodiment of the drivetrain not according to the invention in two different operating situations (wherein axial loads are figuratively depicted);
- Figure 3 is a cross-section view of a further possible embodiment of the drivetrain not according to the invention;
- Figures 4 and 5 are cross-section views of embodiments of the drivetrain as in the invention;
- Figures 6 and 7 are cross-section views of further possible embodiments of the drivetrain not according to the invention;
- Figure 7a is a zoomed-in view of figure 7; and
- Figure 8 is a cross-section view of a further possible embodiment not according to the present invention.

In the annexed figures, the drivetrain/gearbox (whose main yet not limiting "destination of use/application" may conveniently be in/for terrestrial vehicles such as automobiles and so on) as in the invention as a whole has been numbered with "1" and it mainly comprises a frame (2), a first driving line (3) supported by the frame (2) (and connectable to a first torque transfer element (100) (e.g., a "first motor/engine" or more in general to any kind of shaft or kinematic joint/chain which can be found in a vehicle's drivetrain) and also a second driving line (4) supported by the frame (2) and connectable to a second torque transfer element (200) (which can be of any analogous kind of structural components as already exemplified with regard to the first torque transfer element).

In the annexed drawings, the first and second torque transfer elements are partially visible, and as previously stated, they can conveniently be any kind of power source or motor, even of the known type: therefore, a further level of detail on those components is not required in order to clarify the scope of the present invention.

The first driving line (3) and the second driving line (4) are in a juxtaposition relationship within the frame (2): as in the wording used in the present invention, such a mutual juxtaposition can therefore be defined as if the two driving lines (3; 4) are axially facing each other.

The drivetrain (1) as in the invention advantageously comprises at least an intermediate element (5) directly interposed between the first driving line (3) and the second driving line (4): from a functional standpoint, the just cited intermediate element (5) is preferably adapted/dedicated to share and transmit one or more of the following:
- axial loads active in the first driving line (3) into the second driving line (4);
- axial loads active in the second driving line (4) into the first driving line (3);
- axial loads active into the first and/or second driving line (4, 3) into the frame (2).

As in the invention, the expression "load active in a driving line" implies that the structural components of such driving lines are undergoing to a "torque flow", which is therefore acting (or insisting) on the structural components themselves.

Conveniently, the intermediate element (5) is capable to transmit axial force between the two driving lines (3) and (4) which are mutually faced in correspondence of coaxial shafts (and coaxial shafts are commonly found in T-shaped gearboxes/drivetrains).

It is also to be noted that thanks to the presence of the intermediate element (5), axial forces will mostly cancel out, or balance out, through this bearing, but as this element/bearing will have a minimal moving/rotating speed difference (that is, essentially the same speed or a significantly small difference in speed values) relative to the shafts of the driving lines (3) and/or (4): by keeping the moving/rotating speed at a minimum (or even zero) level of quantitative difference, power losses here will be accordingly minimized (and at the same time, the cancelling of the axial forces significantly reduces loads on the other bearings within the driving lines, allowing for the usage of smaller and lighter bearings and for the lowering of loads transmitted onto the frame).

It is also to be noted that, since axial loads in such kind of driving lines are essentially correlated to the vectorial subdivision of the internal reactions in the zones of inter-meshing of gears (and since usually such gears have a helicoidal pattern, it is thereby useful to think of this active force on the gear mesh in terms of its components in radial, tangential and axial direction), the present invention is able to efficiently cope with a wide range of angles of such helical gears.

Turning now back to structural features and looking closely at the annexed figures, it can be observed that the intermediate element (5) is residing in a mutual proximity area (6) defined in correspondence of a central plane (2a) of the frame (2): such a central plane (2a) comprises at least a central supporting member (2b) and defines, from a geometrical standpoint, a first half-space and a second half-space which are mutually opposite, with respect to the central plane (2a), so that each of these half-spaces respectively house the first and the second driving line (3), (4).

As in the invention, the intermediate element (5) also allows a difference in relative rotation between the two driving lines in the area wherein they come into a condition of mutual proximity: this allowance lets the two "sides" (e.g., the two driving lines (3) and (4)) to work by setting into rotation their respective kinematic chains while the sharing and re-distribution of the axial loads takes place in a "dedicated area" (which can be structurally identified as the already cited mutual proximity area (6)): more in general as in the invention any kind of intermediate element/bearing will be deemed "suitable" as long as it is capable of transmitting the axial force (e.g., not just bearings meant exclusively/mainly for axial force transmission) and as long as it is capable of allowing different relative rotational speeds of two "sides" of the drivetrain itself.

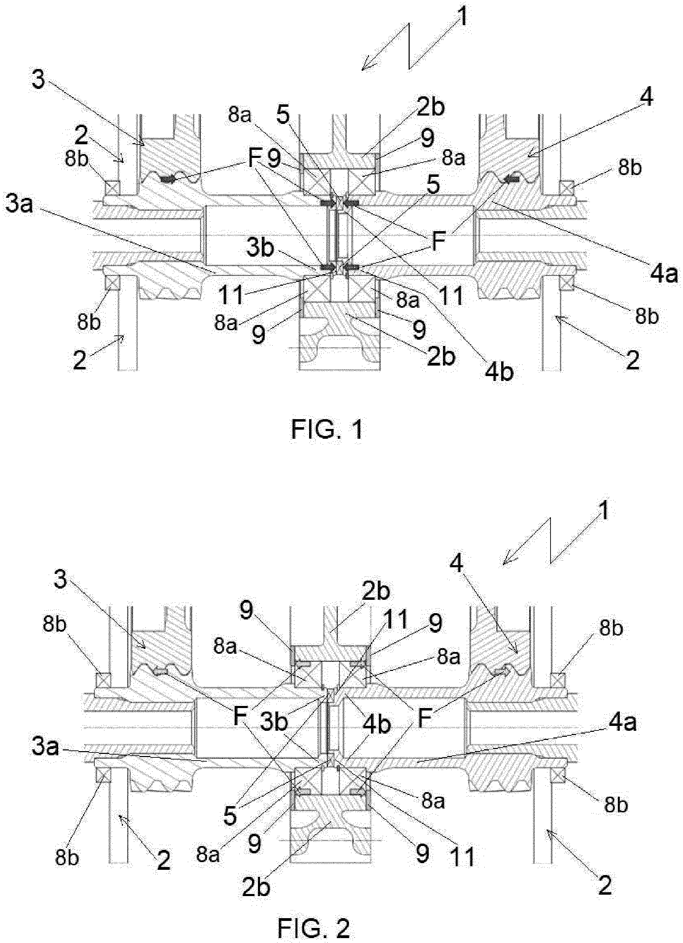

Keeping in mind what just stated and looking now to figure 1, a possible working/operative condition of the drivetrain (1) is shown, wherein a given scheme of axial forces (F) is arising and is oriented towards the central plane (2a) of the frame (2) (such a scheme of forces may derive from an accelerating condition of the vehicle, and in this case one of the possible "sources" of these axial loads is constituted by the engines providing a torque input under command of the vehicle's driver): in this scheme, axial forces acting "inwards" are cancelled out on the intermediate element (5) which exemplificatively may comprise a bearing which allows relative rotational speed between shafts (3a; 4a) belonging to first driving line (3) and second driving line (4).

Otherwise stated, the intermediate element (5) allows for relative rotational speed between the shaft belonging to the first driving line (3) and the shaft belonging to second driving line (4): these shafts are in a contact relationship with the intermediate element (5) in mutual proximity area (6).

Generally speaking, the direction of axial force is determined by the "torque direction", which is a consequence of a given driving state or condition (e.g. "positive" driving, when the user/driver of a vehicle commands the motor(s) to have a torque output towards the gearbox, or "regenerative" driving, when the vehicle is slowing down and its internal systems convert kinetic energy into electrical charge) and the so-called "helix angle" of the gears' teeth: such a helix angle on the gears may therefore be designed in any suitable and/or known way, as in the design and/or functional requirements of the drivetrain (1).

Acceleration/deceleration of the vehicle is not exclusively defining the direction of axial forces/loads within the drivetrain, but usually as acceleration loads are more frequent (in terms of timely occurrence) and/or higher in value, for best benefit of this invention the gears' teeth helix angle can conveniently be oriented in such a way to generate inward acting axial forces in an "accelerating vehicle" driving condition.

Figure 2 shows a possible scheme of axial forces (F) which are acting "outwards" (i.e., away from the central plane (2a) of the frame (2)): such a scheme may be related to a deceleration of the vehicle, or to the intervention of a regenerative braking system, whereby such forces are transmitted into the drivetrain (1), and by exploiting the structural features of the invention, the axial loads are discharged, after having been shared (and therefore distributed) through the intermediate element(bearing (5), onto the external containment structure of the frame (2).

Regarding the just cited example, it can be observed that deceleration of the vehicle would not necessarily cause the loads through the gearbox as most of the deceleration on significant speeds comes from air resistance and tire friction, therefore the axial loads in this driving condition are generated by:
- losses generated in the motor(s), which in turn can be considered as being located "upstream" or "before" the position of this invention (which however can be consisting in a "lesser" order of magnitude from the quantitative standpoint, if compared to other losses/causes of deceleration of the vehicle); and
- losses generated in relationship with regenerative braking (which can be consisting in a "greater" order of magnitude from the quantitative standpoint, if compared to other losses/causes of deceleration of the vehicle).

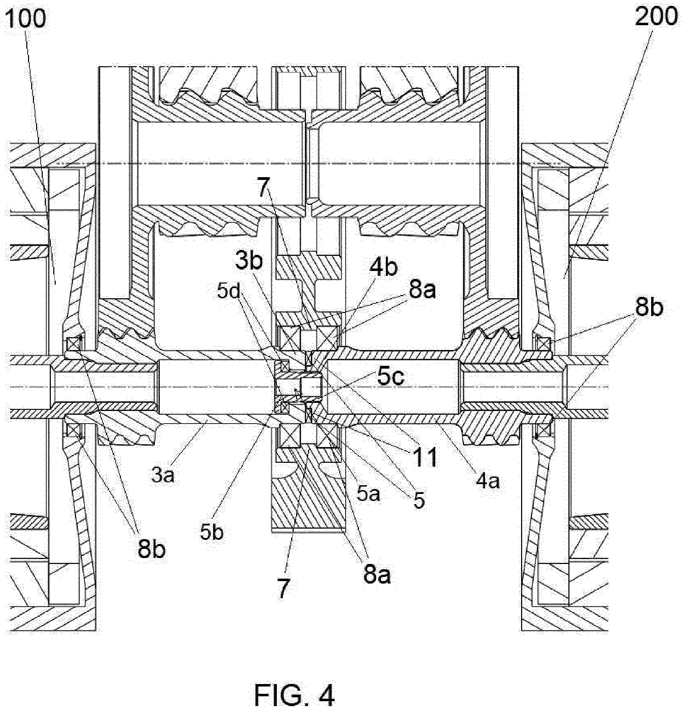

Conveniently, in the embodiment depicted in figure 4 the present invention provides that the intermediate element (5) is cooperating with a central bushing (5a): such a central bushing (5a) has two mutually opposite first and second end (5b; 5c) respectively connected to a proximal end (3b) of the first transfer shaft (3a) and to a proximal end (4b) of the second transfer shaft (4a) so as to allow relative rotation of the first transfer shaft (3a) with respect to the second transfer shaft (4a).

The just cited proximal ends (3b; 4b) of the first and second transfer shafts (3a; 4a) are conveniently placed in the mutual proximity area (6), and the invention allows for a distribution and/or equalization of axial forces/loads directed "outwards" in the transfer shafts (3a; 4a) themselves.

More in detail, and referring to exemplificative figure 4, the first end (5b) of the central bushing (5a) is in contact with (or, otherwise stated, it is touching) the proximal end of the first transfer shaft (3a), while the second end (5c) of the central bushing (5a) is integrally engaged with the proximal end of the second transfer shaft (4a) (e.g., by ways of a thread/screw engagement or by any other equivalent connection means): in this arrangement, the interconnection between the two transfer shafts (3a; 4a) allows relative rotation but at the same time allows for axial loads/forces re-distribution and "equalization", allowing at the same time a downsizing in the overall dimensions of the components of the present drivetrain with respect to known types of such devices.

As in other possible embodiments of the invention, the central bushing (5a) can be made in a single piece with one of the two shafts (3a) or (4a): in other possible embodiments, the end (5b) or (5c) in contact with the other shaft (4a) or (3a) can conveniently be screwed on or held on with any suitable connecting element.

It is to be noted that in the embodiment just represented the capability of allowing relative rotation between the transfer shafts (3a; 4a) may be enhanced by ways of a second intermediate element (5d) interposed between the first end (5b) of the central bushing (5a) and the proximal end of the first transfer shaft (3a), and at the same time the interconnection between the central bushing (5a) and the proximal ends (3b; 4b) of the transfer shafts (3a; 4a) may be adjusted in terms of axial mechanical interference: for example, by operating on the thread/screw engagement it is possible to impart a given preload to the interconnection, or it is also possible to allow for some axial clearance between the two transfer shafts (3a; 4a) as in design and/or operative requirements desired/needed.

As in further possible variants of this embodiment, the thread/screw engagement between the central bushing (5a) and the second transfer shaft (4a) may be chosen in order to achieve further technical effects: for example, the thread can be of the "tapered" and/or of the "oversized" type (in order to void unscrewing of the central bushing from the transfer shaft): otherwise stated, the male thread or the female thread may be realized with a dimensional and/or pitch difference, so as to simulate an interference fit.

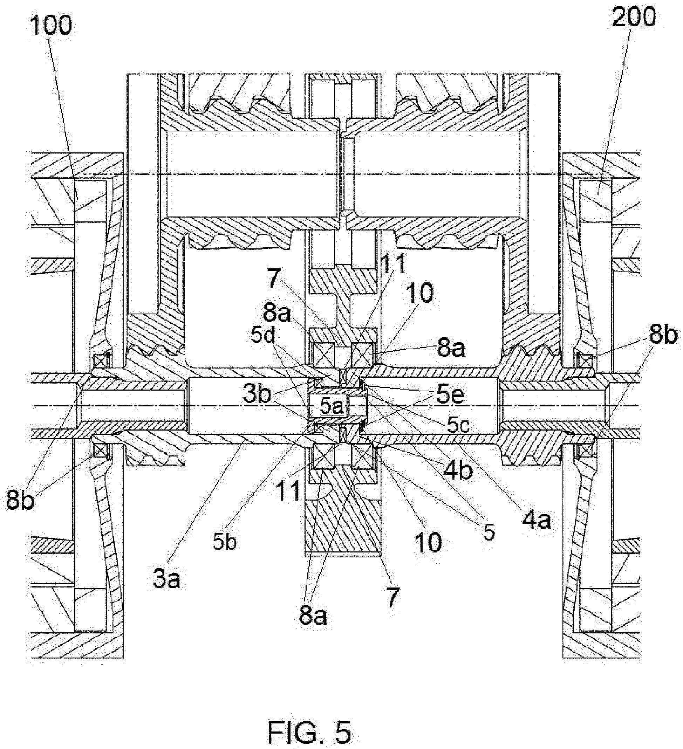

An additional embodiment capable to cope with outwardly directed axial forces/loads is represented in figure 5, wherein a central bushing (5a) having a first end (5b) and a second end (5c) is interfaced into the proximal ends (3b; 4b) of the first transfer shaft (3a) and of the second transfer shaft (4a), while maintaining an axial constraint between the two transfer shafts (3a; 4a) themselves: this further embodiment allows relative shafts' rotation and at the same time allows for axial loads/forces re-distribution and "equalization" in presence of outwardly directed forces/loads.

It is to be noted that in the embodiment depicted in fig. 5 the central bushing (5a) is still capable to axially retaining both the first and the second transfer shafts (3a; 4a): this kind of interconnection is made possible through the presence of suitably shaped retainers (5e), which are coaxially mounted on the central bushing (5a) and are located between and end of the central bushing (5a) (e.g., in annexed figure 5, the second end (5c) and the proximal end (4b) of the second transfer shaft (4a)).

The embodiment illustrated in figure 5 may also provide for a given degree of pre-load to be exerted between the transfer shafts (3a; 4a), the intermediate element (5), the second intermediate element (5a) and the central bushing (5a): such a preload may exemplificatively attained through suitable choice of geometric dimensions and relative tolerances, or it may also be determined by suitably heating the central bushing (5a) itself during assembly and/or by cooling down the shaft's assembly.

The just cited heating and/or cooling operations conveniently determine an increase of relative dimensions and to produce a given axial (mutual) clearance, as these structural components mutually exchange heat and therefore reach the same "final" temperature (and, consequently, a desired level of mechanical interference or even a given axial tolerance, if required/needed).

The present embodiment is also capable, through a suitable choice of design parameters of its structural features, to efficiently cope with "unbalanced" axial forces/loads schemes, which may, for example, derive from a travelling condition of the vehicle along a curved path or whenever a torque vectoring action is required by the driver or by the onboard active safety/management systems (such as the ABS, TCS or ESC): in these cases, any eventual net difference in quantitative terms of axial loads coming from one side (or half-space) or from the other side (or half-space) of the drivetrain (1) is managed in such a way that the unbalancing itself is minimized and discharged/distributed onto the most suitable components of the drivetrain (1) itself.

Delving deeper in the details and recalling the functional aims of the present invention, it can be seen that the intermediate element (5) may comprise any known type of bearing (e.g., a plain bearing, a ball bearing or a roller bearing): at the same time, the drivetrain (1) also comprises a first transfer shaft (3a), belonging to the first driving line (3), and a second transfer shaft (4a), belonging to the second driving line (4).

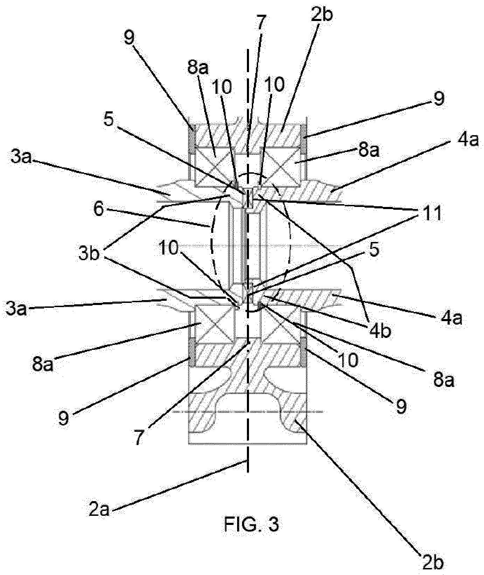

The just cited first and second transfer shafts (3a), (4a) are mutually facing each other in correspondence of an internal space which is defined, in the wording of the present invention, by a mutual proximity area (6) (which can be indicatively seen in figure 3): otherwise stated, the intermediate element (5) is directly interposed between the first transfer shaft (3a) and the second transfer shaft (4a).

Conveniently, in order to guarantee correct and stable positioning of the intermediate element (5), a seating (11) adapted to house at least partially the intermediate element (5) can be provided into the most suitable portion of the first transfer shaft (3a) and/or of the second transfer shaft (4a): such a seating (11) is typically counter-shaped to the intermediate element (5) and can conveniently be integrally located in the first transfer shaft (3a) and/or in the second transfer shaft (4a) in correspondence of the mutual proximity area (6).

In a possible embodiment of the invention, the drivetrain (1) may further comprise at least a shoulder (7), which is active between at least the first transfer shaft (3a) and the second transfer shaft (4a).

From a functional standpoint, the shoulder (7) is adapted/dedicated to share and transmit:
- axial loads active in the first driving line (3) into the second driving line (4); and/or
- axial loads active in the second driving line (4) into the first driving line (3); and/or
- axial loads active into the first and/or second driving line (4, 3) into the frame (2),
thereby cooperating with the other structural components of the invention in sharing, re-distributing and/or countering axial loads arising from the intermeshing gears when they undergo a "torque flow".

As in further possible embodiments of the invention, the drivetrain (1) may also comprise:
- a predetermined number of auxiliary inner bearings (8a) located in the frame (2) and associated at least with the first transfer shaft (3a) and/or with the second transfer shaft (4a), which are located in the mutual proximity area (6);
- a predetermined number of auxiliary outer bearings (8b) located in the frame (2) and in correspondence of ends of the first transfer shaft (3a) and/or of the second transfer shaft (4a) which can be considered as "opposite" with respect to shafts' ends residing in the mutual proximity area (6)); and
- a predetermined number of bearing fixation elements (9) interposed between the frame (2) and the intermediate element (5) and/or the central bushing (5a) and/or the inner/outer auxiliary bearings (8a; 8b).

The inner and/or outer auxiliary bearings (8a; 8b) may be implemented in any suitable form (even of the known type), according to design and/or performance requirements.

Looking at the exemplificative embodiment depicted in figure 3, it can be seen that the invention may also comprise a shoulder (7) which is integrally protruding from the central supporting member (2b) and is cooperatively acting with said at least intermediate element (5): in order to gain a significant behavioral symmetry, the central supporting member (2b) may comprise the shoulder (7) circularly extending, in the mutual proximity area (6), around the intermediate element (5) and/or in proximity or in contact with the auxiliary inner bearings (8a).

A functional advantage of the shoulder (7) consists in a helping the distribution of the axial forces/loads, for example in occurrence of peculiar driving conditions such as "extreme torque vectoring" conditions and so on.

Again, as in a further possible embodiment of the present invention, suitable axial pre-loading means (10) can be provided: such axial pre-loading means (10) are functionally cooperating with one or more of the inner/outer auxiliary bearings (8a; 8b) (or even and/or on the intermediate element (5) and/or on the central bushing (5a)) in order to impart them a suitable axial pre-load as in the design and/or operative requirements.

From a merely structural (and exemplificative) standpoint, the axial pre-loading means (10) may be realized as in any type of known technique and/or device: for example, they can be realized with solid and/or substantially non-deformable elements such as shims, nuts, covers or any other fairly incompressible or rigid part/component, or also with springs or any other functionally equivalent elastic or "compressible" devices, provided that they are capable to exert an appropriate amount of pre-load on the structural components to which they are structurally related.

More in general, the axial pre-loading means (10) may also be implemented in other layouts, even of the known type (and therefore not depicted in the exemplificative figures), and from a functional standpoint they can be operatively active on the intermediate element (5) and/or on the central bushing (5a) and/or on the inner/outer auxiliary bearings (8a; 8b).

In order to achieve a better understanding of the invention, a first possible working condition of the drivetrain (1) may be illustrated wherein the two driving lines (3) and (4) are transmitting the same torque: in such a scenario, the driving lines (3) and (4) (which, for the sake of illustration of the invention, may be regarded as transmitting a "positive torque" which causes axial loads acting opposite/inward due to gears having a respectively opposite helix angle), axial forces/loads coming from the two driving lines (3) and (4) are fully cancelled out by the intermediate element (5).

In this first exemplificative scenario, the axial forces/loads coming from the first driving line (3) are exerted towards the second driving line (4), while the axial forces/loads coming from the second driving line (4) are exerted towards the first driving line (3): since the first driving line (3) is linearly adjacent to the second driving line (4), and the intermediate element (5) is interposed between the first driving line (3) and the second driving line (4), the axial forces/loads coming from the first driving line (3) towards the second driving line (4) cancel out the axial forces/loads coming from the second driving line (4) towards the first driving line (3) up to a point wherein the net value of the sum of such axial forces/loads is equal to zero.

Beside this possible working condition (or "scenario"), another possible second scenario may be devised, wherein the two driving lines (3) and (4) are both generating respective positive torques, whose values/amounts are different: in this second scenario, the axial forces/loads are cancelled out up to the minimum "common" value using the intermediate element (5).

In this second exemplificative scenario, the axial forces/loads coming from the first driving line (3) are exerted towards the second driving line (4), while the axial forces/loads coming from the second driving line (4) are exerted towards the first driving line (3): since the first driving line (3) is linearly adjacent to the second driving line (4), and the intermediate element (5) is interposed between the first driving line (3) and the second driving line (4), the axial forces/loads coming from the first driving line (3) towards the second driving line (4) cancel out the axial forces/loads coming from the second driving line (4) towards the first driving line (3) up to a point wherein the net value of the sum of such axial forces/loads is equal to the jus cited "minimum common value".

A third scenario wherein the present invention may be exerting its technical effects may be consisting in the two driving lines (3) and (4) being subjected to a so-called negative torque, which may be defined as a torque causing axial loads directed towards the external surfaces/portions of the frame (2) (such torque may for example derive from the regenerative system of the vehicle): in this scenario, axial forces/loads coming from the two driving lines (3) and (4) are transferred to the frame (2) by the bearing fixation elements (9) and/or the central bushing (5a) and/or the outer auxiliary bearings (8b), and more in detail the central bushing (5a) allows or supports the second intermediate element (5d) which allows the canceling of outward acting axial forces.

In this third exemplificative scenario, the axial forces/loads coming from the first driving line (3) and from the second driving line (4) are exerted towards the outer sides of the frame (2), and the central bushing (5a) supports the second intermediate element (5d) which allows the canceling of outward acting axial forces: such a cancellation may be interpreted as a reduction of the net outward acting forces to a "lowest common value", which in turn Is transferred to the frame (2) through the auxiliary outer bearings (8b).

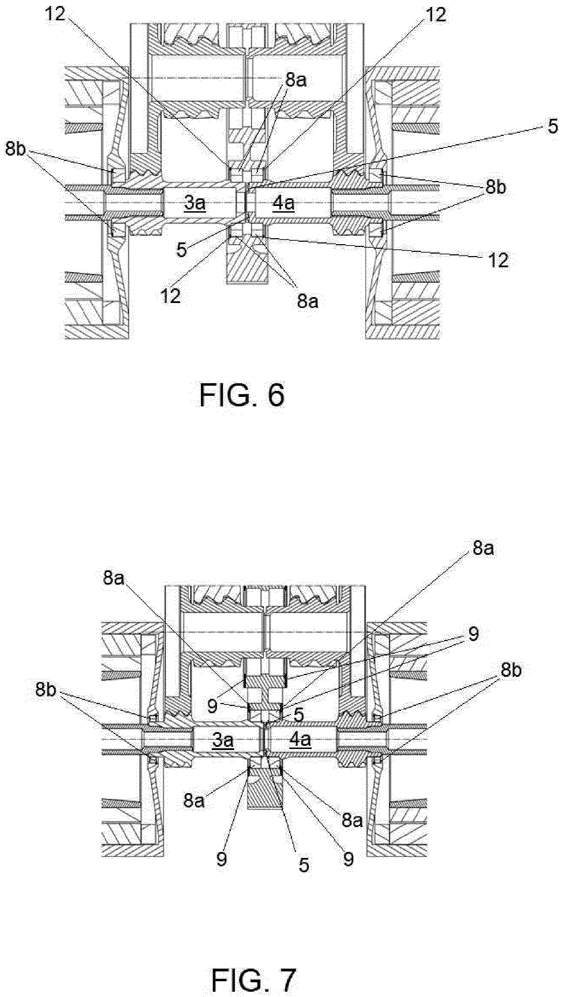

As already mentioned before, in the embodiment shown in figure 6, circlips (12) or any other suitable (and functionally equivalent) means can be associated with the inner auxiliary bearings (8a) and/or with the outer auxiliary bearings (8b), and they also can be combined, according to various operative and/or performance requirements, with one or more of the other structural features described and/or claimed.

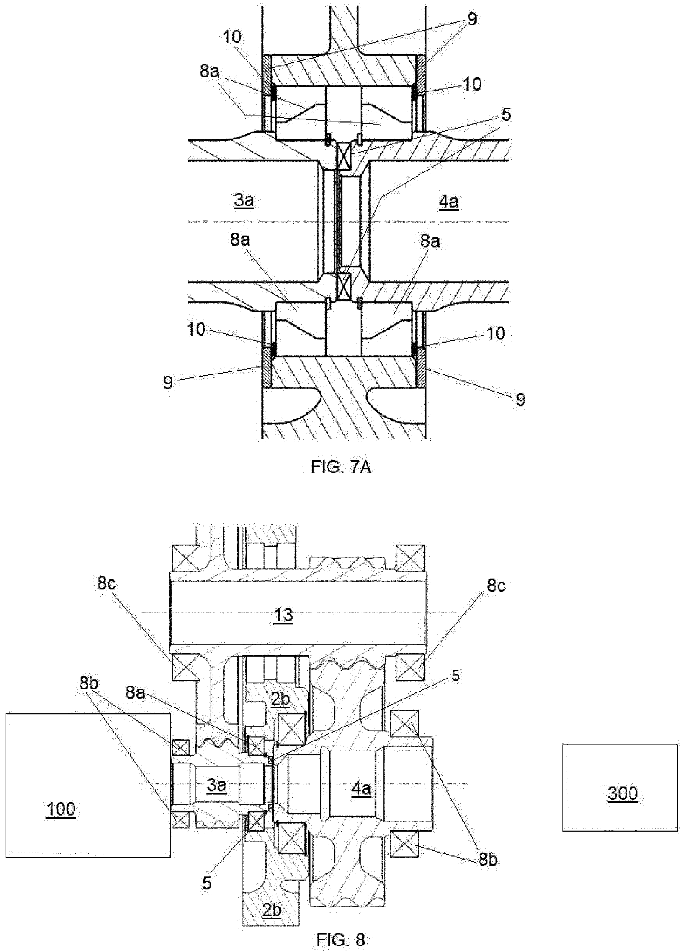

At the same time, looking at the embodiments shown in figure 6 and 7, it is possible to see that so-called "tapered" bearings can be implemented (more specifically: in figure 6, tapered bearings are used as outer auxiliary bearings (8b), while in figure 7 tapered bearings are used as inner auxiliary bearings (8a)), while looking at the zoomed-in figure 7a it is possible to observe that bearing fixation elements (9) are structurally and functionally cooperating with pre-loading means (10), hereby represented as "shims", in order to set a suitable amount of axial pre-load to the inner auxiliary bearings (8a).

Looking now at figure 8, a further embodiment is shown, wherein only one of the shafts (3a) or (4a) is receiving power from a first torque transfer element (e.g., a motor schematically indicated with reference numeral (100) in figure 8): such power, generating a corresponding "torque flow" is transferred along the first shaft (3a) through and intermediate cross plane shaft (13) towards a second shaft (4a), which is connected by suitable means to an "output device" schematically indicated with the reference numeral (300) in figure 8 (such an output device may for example be a wheel or a differential or an axle and so on): in this embodiment, the intermediate element (5) is located, once again, between the first shaft (3a) and the second shaft (4a) and is able to cancel out axial forces between the two shafts.

Focusing on the functional aspects of the just introduced embodiment, it is to be observed that the rotational speed ratio between the first shaft (3a) and the second shaft (4a) is fixed, as it is dependent upon the transmission ratio established by the intermediate cross plane shaft (13), which is obviously located between the first and second shafts (3a; 4a) so as to compenetrate and/or pass through the central supporting member (2b).

At the same time, it is to be noted that in the embodiment shown in figure 8, the axial forces/loads arise, as in the previous embodiments, because of the helix angle on the gear teeth on point of contact between the two gears (and conveniently, the second shaft (4a) can be axially aligned with the first shaft (3a)).

Conveniently, the embodiment shown in figure 8 might find application not only in single motor gearboxes, but also in non-automotive applications (such as, for example, turbine/power generation, test apparatuses, agricultural machinery).

The embodiment shown in figure 8 can conveniently be implemented with one or more of the additional technical features already illustrated in relationship with the other embodiments hereabove described and/or herebelow claimed.

The described, illustrated and claimed invention achieves the aforecited technical aims and surpasses the shortcomings of the prior art hereabove mentioned, starting but not being limited to the advantage consisting in a very high degree of volumetric compactness, joined with the capability of withstanding high axial (internal) loads and with the allowance for shorter (or maybe even shortest) load paths for axial forces in some driving conditions in a very wide array of possible driving situations (which respectively correspond to different driving inputs given by a user of the vehicle in which such a gearbox is mounted).

Besides, the overall structural architecture of the drivetrain/gearbox may be implemented, in some cases with respect to known types of gearboxes/drivetrains, with a reduced overall number of components, thereby determining a cost-effective design/building process, in a particularly remarkable relationship with the "T-shaped design/configuration" of the drivetrain itself and therefore allowing for a very efficient dealing with balanced and/or unbalanced axial loads within such a gearbox design in various operative conditions of the vehicle in which the gearbox itself is mounted.

Furthermore, the overall structure of the present invention can be implemented in various embodiments, so as to cope with various ranges of torque outputs, maximum rotational speed values and whatever else operating parameter involved with the coupling of two (or more) engines/motors to the drivetrain as in the invention.

## Claims

1. a drivetrain for vehicles, comprising:
- a frame (2);
- a first driving line (3) supported by said frame (2) and connectable to a first torque transfer element (100);
- a second driving line (4) supported by said frame (2) and connectable to a second torque transfer element (200); and
- at least an intermediate element (5) directly interposed between the first driving line (3) and the second driving line (4), wherein
- said intermediate element (5) comprises a bearing which allows relative rotational speed between shafts (3a; 4a) belonging to first driving line (3) and second driving line (4);
- the intermediate element (5) is residing in a mutual proximity area (6) defined in correspondence of a central plane (2a) of the frame (2), said central plane (2a) comprising at least a central supporting member (2b) and defining a first half-space and a second half-space opposite to said first half-space with respect to said central plane (2a), each of said first and second half-spaces respectively housing the first driving line (3) and the second driving line (4);
- it further comprises a first transfer shaft (3a) belonging to the first driving line (3) and a second transfer shaft (4a) belonging to the second driving line (4), said first and second transfer shafts (3a), (4a) being mutually facing each other in correspondence of the mutual proximity area (6), the intermediate element (5) being directly interposed between said first transfer shaft (3a) and said second transfer shaft (4a), wherein the first transfer shaft (3a) includes a first end face (3b), and the second transfer shaft (4a) includes a second end face (4b) facing the first end face (3b), wherein the intermediate element (5) being positioned between the first transfer shaft (3a) and the second transfer shaft (4a) such that the intermediate element (5) remains in direct contact with each of the first end face (3b) and the second end face (4b); **characterized in that**, the drivetrain further comprises a central bushing (5a) cooperating at least with said intermediate element (5), said central bushing (5a) having two mutually opposite first and second end (5b; 5c) respectively interfaced with a proximal end (3b) of the first transfer shaft (3a) and to a proximal end (4b) of the second transfer shaft (4a), said proximal ends (3b; 4b) of the first and second transfer shafts (3a; 4a) being located in the mutual proximity area (6).

2. a drivetrain as in claim 1, wherein said intermediate element (5) is adapted to share and transmit one or more of the following:
- axial loads active in the first driving line (3) into the second driving line (4);
- axial loads active in the second driving line (4) into the first driving line (3);
- axial loads active into the first and/or second driving line (4, 3) into the frame (2).

3. a drivetrain as in claims 1 or 2, wherein said intermediate element (5), the second driving line (4) and the first driving line (3) are operatively interconnected so that axial loads mutually exchanged between the intermediate element (5), the second driving line (4) and the first driving line (3) are cancelled out to a minimum common value, through the intermediate element (5) itself.

4. a drivetrain as in claim 1, wherein:
- the first end (5b) of the central bushing (5a) is interfaced with the proximal end (3b) of the first transfer shaft (3a); and
- the second end (5c) of the central bushing (5a) is integrally engaged with the proximal end (4b) of the second transfer shaft (4a), preferably by ways of a thread/screw engagement.

5. a drivetrain as in claims 1 or 4, further comprising a second intermediate element (5d) interposed between:
- the first end (5b) of the central bushing (5a) and the proximal end (3b) of the first transfer shaft (3a); or
- the second end (5c) of the central bushing (5a) and the proximal end (4b) of the second transfer shaft (4a).

6. a drivetrain as in any one of the preceding claims, wherein said central bushing (5a) has the first end (5b) and the second end (5c) interfaced respectively with the proximal end (3b) of the first transfer shaft (3a) and interfaced with the proximal end (4b) of the second transfer shaft (4a) while maintaining an axial constraint between the two transfer shafts (3a; 4a).

7. a drivetrain as in claim 6, further comprising retainers (5e) coaxially mounted on the central bushing (5a) and located between a first end (5b) or a second end (5c) of the central bushing (5a), the second end (5c)) and the proximal end (3b) or (4b) of the first or the second transfer shaft (3a) or (4a).

8. a drivetrain as in any one of the preceding claims, wherein it further comprises:
- inner auxiliary bearings (8a) located in proximity of proximal ends (3b) and/or (4b) of the first and/or of the second transfer shafts (3a) and/or (4a) within the mutual proximity area (6); and
- outer auxiliary bearings (8b) located in correspondence of opposite ends of the first transfer shaft (3a) and/or of the second transfer shaft (4a) with respect to shafts' ends residing in the mutual proximity area (6).

9. a drivetrain as in any one of the preceding claims, further comprising a predetermined number of bearing fixation elements (9) interposed between the frame (2) and the intermediate element (5) and/or the central bushing (5a) and/or the inner auxiliary bearings (8a) and/or the outer auxiliary bearings (8b).

10. a drivetrain as in any one of the preceding claims, further comprising axial pre-loading means (10) cooperatively active on one or more of the following:
- the intermediate element (5);
- the central bushing (5a);
- the second intermediate element (5d);
- one or more of said inner auxiliary bearings (8a);
- one or more of said outer auxiliary bearings (8b).

## Patentansprüche

1. Antriebsstrang für Fahrzeuge, umfassend:
- einen Rahmen (2);
- eine erste Antriebslinie (3), die von dem Rahmen (2) getragen wird und mit einem ersten Drehmomentübertragungselement (100) verbindbar ist;
- eine zweite Antriebslinie (4), die von dem Rahmen (2) getragen wird und mit einem zweiten Drehmomentübertragungselement (200) verbindbar ist; und
- mindestens ein Zwischenelement (5), das direkt zwischen der ersten Antriebslinie (3) und der zweiten Antriebslinie (4) angeordnet ist,
wobei
- das Zwischenelement (5) ein Lager umfasst, das eine relative Drehzahl zwischen Wellen (3a; 4a) ermöglicht, die zu der ersten Antriebslinie (3) und der zweiten Antriebslinie (4) gehören;
- das Zwischenelement (5) in einem gegenseitigen Näherungsbereich (6) angeordnet ist, der entsprechend einer Mittelebene (2a) des Rahmens (2) definiert ist, wobei die Mittelebene (2a) mindestens ein mittiges Tragelement (2b) umfasst und einen ersten Halbraum und einen zweiten Halbraum definiert, der in Bezug auf die Mittelebene (2a) dem ersten Halbraum gegenüberliegt, wobei der erste beziehungsweise der zweite Halbraum die erste Antriebslinie (3) beziehungsweise die zweite Antriebslinie (4) aufnimmt;
- er ferner eine erste Übertragungswelle (3a), die zu der ersten Antriebslinie (3) gehört, und eine zweite Übertragungswelle (4a), die zu der zweiten Antriebslinie (4) gehört, umfasst, wobei die erste und die zweite Übertragungswelle (3a), (4a) einander entsprechend dem gegenseitigen Näherungsbereich (6) zugewandt sind, wobei das Zwischenelement (5) direkt zwischen der ersten Übertragungswelle (3a) und der zweiten Übertragungswelle (4a) angeordnet ist, wobei die erste Übertragungswelle (3a) eine erste Stirnfläche (3b) aufweist und die zweite Übertragungswelle (4a) eine zweite Stirnfläche (4b) aufweist, die der ersten Stirnfläche (3b) zugewandt ist, wobei das Zwischenelement (5) derart zwischen der ersten Übertragungswelle (3a) und der zweiten Übertragungswelle (4a) positioniert ist, dass das Zwischenelement (5) in direktem Kontakt sowohl mit der ersten Stirnfläche (3b) als auch mit der zweiten Stirnfläche (4b) bleibt; **dadurch gekennzeichnet, dass** der Antriebsstrang ferner eine Zentralbuchse (5a) umfasst, die mindestens mit dem Zwischenelement (5) zusammenwirkt, wobei die Zentralbuchse (5a) ein erstes und ein zweites Ende (5b; 5c) aufweist, die einander gegenüberliegen und mit einem proximalen Ende (3b) der ersten Übertragungswelle (3a) beziehungsweise mit einem proximalen Ende (4b) der zweiten Übertragungswelle (4a) gekoppelt sind, wobei die proximalen Enden (3b; 4b) der ersten und der zweiten Übertragungswelle (3a; 4a) in dem gegenseitigen Näherungsbereich (6) angeordnet sind

2. Antriebsstrang nach Anspruch 1, wobei das Zwischenelement (5) dazu eingerichtet ist, eines oder mehrere der Folgenden zu verteilen und zu übertragen:
- in der ersten Antriebslinie (3) wirkende Axiallasten in die zweite Antriebslinie (4);
- in der zweiten Antriebslinie (4) wirkende Axiallasten in die erste Antriebslinie (3);
- in der ersten und/oder zweiten Antriebslinie (4, 3) wirkende Axiallasten in den Rahmen (2)

3. Antriebsstrang nach Anspruch 1 oder 2, wobei das Zwischenelement (5), die zweite Antriebslinie (4) und die erste Antriebslinie (3) derart funktionell miteinander verbunden sind, dass zwischen dem Zwischenelement (5), der zweiten Antriebslinie (4) und der ersten Antriebslinie (3) gegenseitig ausgetauschte Axiallasten durch das Zwischenelement (5) selbst bis auf einen gemeinsamen Mindestwert kompensiert werden

4. Antriebsstrang nach Anspruch 1, wobei:
- das erste Ende (5b) der Zentralbuchse (5a) mit dem proximalen Ende (3b) der ersten Übertragungswelle (3a) gekoppelt ist; und
- das zweite Ende (5c) der Zentralbuchse (5a) einstückig mit dem proximalen Ende (4b) der zweiten Übertragungswelle (4a) in Eingriff steht, vorzugsweise mittels eines Gewinde-/Schraubeingriffs

5. Antriebsstrang nach Anspruch 1 oder 4, ferner umfassend ein zweites Zwischenelement (5d), das angeordnet ist zwischen:
- dem ersten Ende (5b) der Zentralbuchse (5a) und dem proximalen Ende (3b) der ersten Übertragungswelle (3a); oder
- dem zweiten Ende (5c) der Zentralbuchse (5a) und dem proximalen Ende (4b) der zweiten Übertragungswelle (4a)

6. Antriebsstrang nach einem der vorhergehenden Ansprüche, wobei das erste Ende (5b) und das zweite Ende (5c) der Zentralbuchse (5a) mit dem proximalen Ende (3b) der ersten Übertragungswelle (3a) beziehungsweise mit dem proximalen Ende (4b) der zweiten Übertragungswelle (4a) gekoppelt sind, während eine axiale Fixierung zwischen den beiden Übertragungswellen (3a; 4a) aufrechterhalten wird

7. Antriebsstrang nach Anspruch 6, ferner umfassend Sicherungselemente (5e), die koaxial an der Zentralbuchse (5a) montiert und zwischen einem ersten Ende (5b) oder einem zweiten Ende (5c) der Zentralbuchse (5a), dem zweiten Ende (5c)) und dem proximalen Ende (3b) oder (4b) der ersten oder der zweiten Übertragungswelle (3a) oder (4a) angeordnet sind

8. Antriebsstrang nach einem der vorhergehenden Ansprüche, wobei er ferner umfasst:
- innere Hilfslager (8a), die in der Nähe proximaler Enden (3b) und/oder (4b) der ersten und/oder der zweiten Übertragungswelle (3a) und/oder (4a) innerhalb des gegenseitigen Näherungsbereichs (6) angeordnet sind; und
- äußere Hilfslager (8b), die entsprechend gegenüberliegenden Enden der ersten Übertragungswelle (3a) und/oder der zweiten Übertragungswelle (4a) in Bezug auf die in dem gegenseitigen Näherungsbereich (6) angeordneten Wellenenden angeordnet sind

9. Antriebsstrang nach einem der vorhergehenden Ansprüche, ferner umfassend eine vorbestimmte Anzahl von Lagerbefestigungselementen (9), die zwischen dem Rahmen (2) und dem Zwischenelement (5) und/oder der Zentralbuchse (5a) und/oder den inneren Hilfslagern (8a) und/oder den äußeren Hilfslagern (8b) angeordnet sind

10. Antriebsstrang nach einem der vorhergehenden Ansprüche, ferner umfassend axiale Vorspannmittel (10), die zusammenwirkend auf eines oder mehrere der Folgenden einwirken:
- das Zwischenelement (5);
- die Zentralbuchse (5a);
- das zweite Zwischenelement (5d);
- eines oder mehrere der inneren Hilfslager (8a);
- eines oder mehrere der äußeren Hilfslager (8b)

## Revendications

1. une transmission pour véhicules, comprenant:
- un bâti (2);
- une première ligne d'entraînement (3) supportée par ledit bâti (2) et pouvant être reliée à un premier élément de transmission de couple (100);
- une seconde ligne d'entraînement (4) supportée par ledit bâti (2) et pouvant être reliée à un second élément de transmission de couple (200); et
- au moins un élément intermédiaire (5) directement interposé entre la première ligne d'entraînement (3) et la seconde ligne d'entraînement (4), dans laquelle
- ledit élément intermédiaire (5) comprend un palier permettant une vitesse de rotation relative entre des arbres (3a; 4a) appartenant à la première ligne d'entraînement (3) et à la seconde ligne d'entraînement (4);
- l'élément intermédiaire (5) est situé dans une zone de proximité mutuelle (6) définie au niveau d'un plan central (2a) du bâti (2), ledit plan central (2a) comprenant au moins un élément de support central (2b) et définissant un premier demi-espace et un second demi-espace opposé audit premier demi-espace par rapport audit plan central (2a), chacun desdits premier et second demi-espaces logeant respectivement la première ligne d'entraînement (3) et la seconde ligne d'entraînement (4);
- elle comprend, en outre, un premier arbre de transmission (3a) appartenant à la première ligne d'entraînement (3) et un second arbre de transmission (4a) appartenant à la seconde ligne d'entraînement (4), lesdits premier et second arbres de transmission (3a), (4a) se faisant mutuellement face au niveau de la zone de proximité mutuelle (6), l'élément intermédiaire (5) étant directement interposé entre le premier arbre de transmission (3a) et ce second arbre de transmission (4a), dans laquelle le premier arbre de transmission (3a) comporte une première face d'extrémité (3b), et le second arbre de transmission (4a) comporte une seconde face d'extrémité (4b) faisant face à la première face d'extrémité (3b), dans laquelle l'élément intermédiaire (5) est positionné entre le premier arbre de transmission (3a) et le second arbre de transmission (4a) de telle sorte que l'élément intermédiaire (5) reste en contact direct avec chacune de la première face d'extrémité (3b) et de la seconde face d'extrémité (4b); **caractérisée en ce que** la transmission comprend, en outre, une douille centrale (5a) coopérant au moins avec cet élément intermédiaire (5), cette douille centrale (5a) ayant une première et une seconde extrémité (5b; 5c) mutuellement opposées, respectivement en interface avec une extrémité proximale (3b) du premier arbre de transmission (3a) et avec une extrémité proximale (4b) du second arbre de transmission (4a), ces extrémités proximales (3b; 4b) des premier et second arbres de transmission (3a; 4a) étant situées dans la zone de proximité mutuelle (6).

2. une transmission selon la revendication 1, dans laquelle ledit élément intermédiaire (5) est adapté pour répartir et transmettre une ou plusieurs des charges suivantes:
- des charges axiales actives dans la première ligne d'entraînement (3) vers la seconde ligne d'entraînement (4);
- des charges axiales actives dans la seconde ligne d'entraînement (4) vers la première ligne d'entraînement (3);
- des charges axiales actives dans la première et/ou la seconde ligne d'entraînement (4, 3) vers le bâti (2).

3. une transmission selon les revendications 1 ou 2, dans laquelle ledit élément intermédiaire (5), la seconde ligne d'entraînement (4) et la première ligne d'entraînement (3) sont interconnectés fonctionnellement de sorte que des charges axiales mutuellement échangées entre l'élément intermédiaire (5), la seconde ligne d'entraînement (4) et la première ligne d'entraînement (3) soient compensées jusqu'à une valeur commune minimale, par l'intermédiaire de l'élément intermédiaire (5) lui-même.

4. une transmission selon la revendication 1, dans laquelle:
- la première extrémité (5b) de la douille centrale (5a) est en interface avec l'extrémité proximale (3b) du premier arbre de transmission (3a); et
- la seconde extrémité (5c) de la douille centrale (5a) est engagée solidairement avec l'extrémité proximale (4b) du second arbre de transmission (4a), de préférence au moyen d'un engagement par filetage/vissage.

5. une transmission selon les revendications 1 ou 4, comprenant, en outre, un second élément intermédiaire (5d) interposé entre:
- la première extrémité (5b) de la douille centrale (5a) et l'extrémité proximale (3b) du premier arbre de transmission (3a); ou
- la seconde extrémité (5c) de la douille centrale (5a) et l'extrémité proximale (4b) du second arbre de transmission (4a).

6. une transmission selon l'une quelconque des revendications précédentes, dans laquelle cette douille centrale (5a) a la première extrémité (5b) et la seconde extrémité (5c) respectivement en interface avec l'extrémité proximale (3b) du premier arbre de transmission (3a) et en interface avec l'extrémité proximale (4b) du second arbre de transmission (4a), tout en maintenant une contrainte axiale entre les deux arbres de transmission (3a; 4a).

7. une transmission selon la revendication 6, comprenant, en outre, des éléments de retenue (5e) montés coaxialement sur la douille centrale (5a) et situés entre une première extrémité (5b) ou une seconde extrémité (5c) de la douille centrale (5a), la seconde extrémité (5c)) et l'extrémité proximale (3b) ou (4b) du premier ou du second arbre de transmission (3a) ou (4a).

8. une transmission selon l'une quelconque des revendications précédentes, dans laquelle elle comprend, en outre:
- des paliers auxiliaires intérieurs (8a) situés à proximité des extrémités proximales (3b) et/ou (4b) du premier et/ou du second arbre de transmission (3a) et/ou (4a) à l'intérieur de la zone de proximité mutuelle (6); et
- des paliers auxiliaires extérieurs (8b) situés au niveau d'extrémités opposées du premier arbre de transmission (3a) et/ou du second arbre de transmission (4a) par rapport aux extrémités des arbres situées dans la zone de proximité mutuelle (6).

9. une transmission selon l'une quelconque des revendications précédentes, comprenant, en outre, un nombre prédéterminé d'éléments de fixation de palier (9) interposés entre le bâti (2) et l'élément intermédiaire (5) et/ou la douille centrale (5a) et/ou les paliers auxiliaires intérieurs (8a) et/ou les paliers auxiliaires extérieurs (8b).

10. une transmission selon l'une quelconque des revendications précédentes, comprenant, en outre, des moyens de précharge axiale (10) agissant en coopération sur un ou plusieurs des éléments suivants :
- l'élément intermédiaire (5);
- la douille centrale (5a);
- le second élément intermédiaire (5d);
- un ou plusieurs de ces paliers auxiliaires intérieurs (8a);
- un ou plusieurs de ces paliers auxiliaires extérieurs (8b).
